# EUROPEAN PATENT APPLICATION

(11) **EP 1 806 318 A1**
(43) Date of publication of application: **11.07.2007**
(21) Application number: 05720441.4
(22) Date of filing: 03.03.2005
(51) Int. Cl.: C01G 23/04, B01J 35/02, B01J 35/08, B01J 37/02, B05D 7/24

(54) **METHOD FOR MANUFACTURING TITANIUM BALL**

(30) Priority: 24.09.2004 JP 2004000307; 07.10.2004 JP 2004000321; 18.10.2004 JP 2004000329; 18.10.2004 JP 2004000329; 18.10.2004 JP 2004000329; 06.12.2004 JP 2004000382; 06.12.2004 JP 2004000382
(71) Applicant: Sumi, Kiichirou, Kita Adachi-gun Saitama 3620808 (JP)
(72) Inventor: SUMI, Kiichirou; 789, Oaza Kobari, Kita Adachi-gUN, Saitama, 3620808 (JP); HUANG, Yun, Gun, Saitama,3620808 (JP)
(74) Representative: HOFFMANN EITLE
(86) International application number: PCT/JP2005/004170
(87) International publication number: WO 2006/033177

(57) **Abstract**

The present invention provides a manufacturing method for a titanium ball that improves a deodorizing function, an antibacterial function, an antifouling function, and an air and water purifying function of titanium dioxides so as to allow coating a base material (21, 22) with titanium oxide (23) simply and accurately, which is also a manufacturing method for a titanium ball that sufficiently displays the above-described functions even in a dark place such as a toilet tank, and is **characterized by** including a step of making titanium oxide powder collide and/or frictionally contact for discoloration.

## Description

### Technical Field

The present invention relates to a manufacturing method for a titanium ball coated with titanium oxide, and more particularly, to a manufacturing method for a titanium ball that is excellent in deodorization, antibacterial effect, antifouling effect, and air and water purifying effects and exerts these effects not only when irradiated by light but also in places that are hardly irradiated by light such as a toilet tank.

### Background of the Invention

Conventionally, titanium dioxide has photocatalytic activity. It has been known that a photocatalyst has various environmental conservation effects such as deodorization, an antibacterial effect, an antifouling effect, air purification, and water purification due to its strong oxidizing power. Therefore, a titanium dioxide catalyst has been used for improvement in the water quality of rivers, air conditioning of public facilities such as hospitals, schools, and offices, a water and air purifying treatments, and the like, and has further been used for home kitchens, toilets, and bathrooms (see Japanese Published Unexamined Patent Application No. 2003-71440, Japanese Published Unexamined Patent Application No. 2004-50174, Japanese Published Unexamined Patent Application No. 2004-663, and Japanese Published Unexamined Patent Application No. 2003-212754, for example).

Titanium dioxide is generally used in the form of a titanium ball or the like by coating the surface of a base material of a ceramic, a metal, a resin, or possibly even a natural mineral with titanium dioxide powder. Therefore, various methods for forming a film of titanium dioxide powder on a base material have also been proposed.

For example, a ceramic ball whose surface has been sandblast-processed,then applied with a primertreatment,dried, applied with a titanium dioxide-containing binder, and baked (see Japanese Published Unexamined Patent Application No. 2002-143872), and a coating member having a base material and a coating layer for which particulate titanium dioxide has been fixedly adhered to the surface of the base material directly without a mixing binder have been proposed, and it has been described that the base material is formed of a sheet, a film, a shield, a fiber, a thread, fabric, glass, ceramic, concrete, resin, or the like. And, as a concrete titanium dioxide adhering method, for example, a spraying step of spraying titanium dioxide in mist form or powder form on the base material surface, an adsorbing step of adsorbing titanium dioxide on the base material surface by attraction of static electricity with which at least either the titanium dioxide or base material surface is charged, a transferring step of making a carrier on whose surface titanium dioxide has been adhered contact the top of the base material to transfer the titanium dioxide to the base material surface, etc., have been proposed (see Japanese Published Unexamined Patent Application No. 2005-7216).

In addition, a coating member having a base material, a paint film formed by applying a paint to the surface of said base material, a coating layer formed of particulate titanium dioxide hardly being buried in said paint film and fixedly adhered to the surface of the paint film has been proposed (see Japanese Published Unexamined Patent Application No. 2004-224641). Such a coating member is provided by press-molding alumina powder into a flat plate form, next sintering the alumina powder at a temperature of 1373 to 1623K, then drying after dipping the sintered alumina porous compact thus obtained in a solution where fine titanium dioxide powder is suspended, to fill the fine titanium dioxide powder in a void part of the sintered compact, and then heating the sintered compact at 573 to 1173K to convert the titanium dioxide to an anatase type.

Meanwhile, since titanium dioxide reacts as a photocatalyst, it requires a light irradiating means for use in a water purification apparatus or an air purification apparatus. For example, a water purification apparatus and an air purification apparatus each provided with a base material having a photocatalytic reaction surface that contacts with water or air and a light-emitting diode that mainly irradiates predetermined visible light and ultraviolet rays with a wavelength of 360 to 400nm have been proposed (Japanese Published Unexamined Patent Application No. 2004-50174. and Japanese Published Unexamined Patent Application No. 2004-663 described above). In addition, a composite material containing titanium dioxide (or another photocatalyst) and solid peroxide has been proposed, and it has been described that such a composite material serves as a new ultraviolet/visible light-activated catalyst, a new type of ultraviolet/visible light-activated photocatalyst indicating an excellent photocatalytic activity even in a visible light region. Moreover, it has been described that, usually, the theoretical figure of 380nm is shifted to around 400nm in the case of an anatase-type titanium dioxide. It has been described that, in the case of a rutile type, since the bandgap energy is smaller than that of the anatase type, titanium dioxide reacts to nearly-400nm light. On the other hand, it has been described that the composite material reacts also to a wavelength of 500nm or more (see Japanese Published Unexamined Patent Application No. 2003-334454).

However, sufficient effects cannot be expected with the conventional coating members or balls using titanium dioxide, and a sufficient activation cannot be obtained in places where not very much light reaches. Therefore, it is difficult to use these in places without light such as in toilet tanks. Moreover, although the material provided by mixing titanium dioxide with peroxide displays effects by an irradiation of visible light rays, there is a problem with safety of the peroxide, etc., so that it is problematic if this is used in familiar household products.

### Summary of the Invention

The present invention has been made in view of the above-described circumstances, and an object thereof is to propose a titanium ball manufacturing method that can simply and reliably form a film of titanium oxide powder having sufficient deodorizing, antibacterial, antifouling, and air and water purifying functions on a base material surface. It is a further object of the present invention to propose a manufacturing method for a titanium ball that sufficiently displays the above-described functions even in a dark place such as a toilet tank.

That is, the present invention is characterized by having the following configuration or structure, and has thereby solved the above-described problems.
(1) A titanium ball manufacturing method, including a step of making titanium dioxide powder collide and/or frictionally contact for discoloration, for forming a film of said discolored titanium oxide on a surface of a base material.
(2) The titanium ball manufacturing method according to the above-described (1), wherein the titanium dioxide powder is discolored from white to gray.
(3) The titanium ball manufacturing method according to the above-described (1) or (2), wherein the titanium dioxide powder and base material are placed in a rotary container that rotates while revolving, the titanium dioxide powder is made to collide and/or frictionally contact, and a film of the discolored titanium oxide is formed on the surface of the base material.
(4) The titanium ball manufacturing method according to the above-described (3), wherein fine pores are formed on the surface of the base material, and the discolored titanium oxide powder is press-fitted into the pores to form a film.
(5) The titanium ball manufacturing method according to the above-described (4), wherein the base material is selected from any one or more of ceramics, metals, metal oxides, resins, and natural minerals.
(6) The titanium ball manufacturing method according to the above-described (5), wherein the base material is alumina.
(7) The titanium ball manufacturing method according to the above-described (1), wherein an auxiliary raw material that generates electromagnetic waves having a wavelength to enhance a catalytic reaction of the discolored titanium oxide is added besides the titanium dioxide powder raw material.
(8) A titanium ball obtained by the manufacturing method according to the above-described (1).
(9) The titanium ball according to the above-described (8), being contained in a toilet tank.
(10) The titanium ball according to the above-described (9), together with which an auxiliary ball that generates electromagnetic waves having a wavelength to enhance a catalytic reaction of the discolored titanium oxide is further contained in the toilet tank.

### Brief Description of Drawings

Fig. 1 is a schematic sectional view of a titanium ball according to a first embodiment manufactured by a titanium ball manufacturing method of the present invention.
Fig. 2 is a schematic sectional view of a titanium ball according to a second embodiment manufactured by a titanium ball manufacturing method of the present invention.
Figs. 3(a) to (c) are schematic sectional views of auxiliary balls made of/with another auxiliary substance.
Fig. 4 is a front view of a container containing titanium balls of the first and second embodiments and auxiliary balls.
Fig. 5 is a partial sectional view of a toilet tank when the container shown in Fig. 4 is used in the toilet tank.
Fig. 6 is a schematic view of a planetary ball mill that is used when manufacturing titanium balls of an example.
Fig. 7 is a bar graph chart showing the decomposition amount of inorganic nitrogen in a solution to the elapsed time using titanium balls of an example.
Fig. 8 is a bar graph chart showing the decomposition amount of total nitrogen in a solution to the elapsed time using titanium balls of an example.
Fig. 9 is a photomicrograph of the surface part of a titanium ball of an example magnified 1,000 times.
Fig. 10 is a photomicrograph of the surface part of a titanium ball of an example magnified 10,000 times.

### Best Mode for Carrying Out the Invention

Hereinafter, embodiments and examples of the present invention will be described in detail based on the drawings.

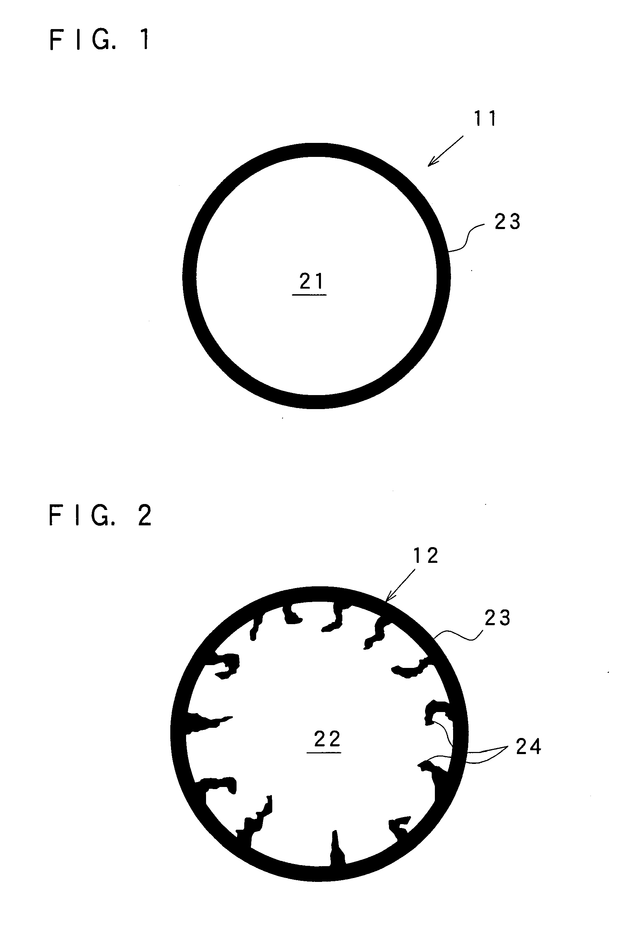

A manufacturing method for a titanium ball of the present invention includes, for example, as shown in Fig. 1 and Fig. 2, a step of making titanium dioxide powder collide and/or frictionally contact for discoloration, and forms a film 23 of discolored titanium oxide on the surface of a base material 21 or 22 so as to form titanium balls 11, 12.

With regard to the titanium dioxide powder (particulates) being a raw material, usage thereof is not limited as long as it is one conventionally used as a photocatalyst. For example, it may be an anatase type or a rutile type that reacts to visible light as long as it has photocatalytic activity, and may be a brookite type. The titanium dioxide may be normal titanium dioxide for a photocatalyst, the raw material is white powder, and anatase-type titanium dioxide is preferably used.

The particle diameter of the above-described titanium dioxide powder is preferably equal to or less than 1µm, and more preferably, in a range of 3nm to 100nm.

It is preferable to form the discolored titanium oxide film 23 on the surface of the base material 21 or 22 in a thickness range of 1 to 3µm. With a thickness less than the above-described range, the titanium balls 11, 12 may not have a sufficient catalytic effect. With a thickness exceeding the above-described range, the catalytic effect does not increase despite an increase in the amount of discolored titanium oxide.

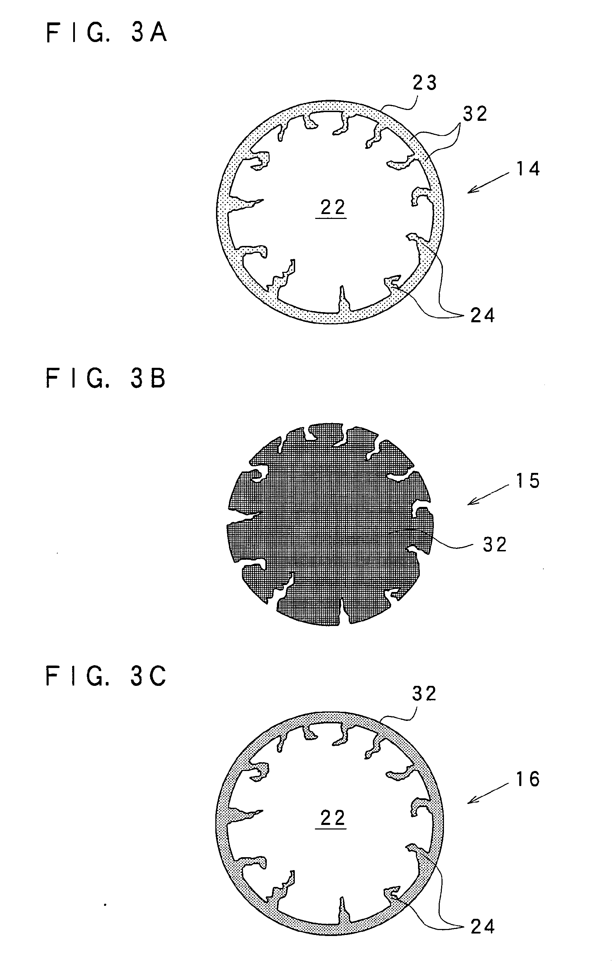

Moreover, besides the above-described titanium dioxide, another powder raw material 32 may be mixed in a range not obstructing the performance of discolored titanium oxide (see Fig. 3 (a)) . In particular, for allowing a sufficient use thereof even in a place where light irradiation is small, it is preferable to contain auxiliary powder that generates electromagnetic waves having a wavelength to enhance a catalytic reaction of the discolored titanium oxide. Here, the electromagnetic waves are a general name for waves from a short-wavelength region including gamma rays, visible light, and furthermore, to a long-wavelength region including radio waves, and among these, a mineral or natural zeolite that generates a low dose of microwaves such as phyllite that is naturally produced, and a mineral or natural zeolite that generates infrared rays or far-infrared rays such as so-called green zeolite can be mentioned as auxiliary raw materials.

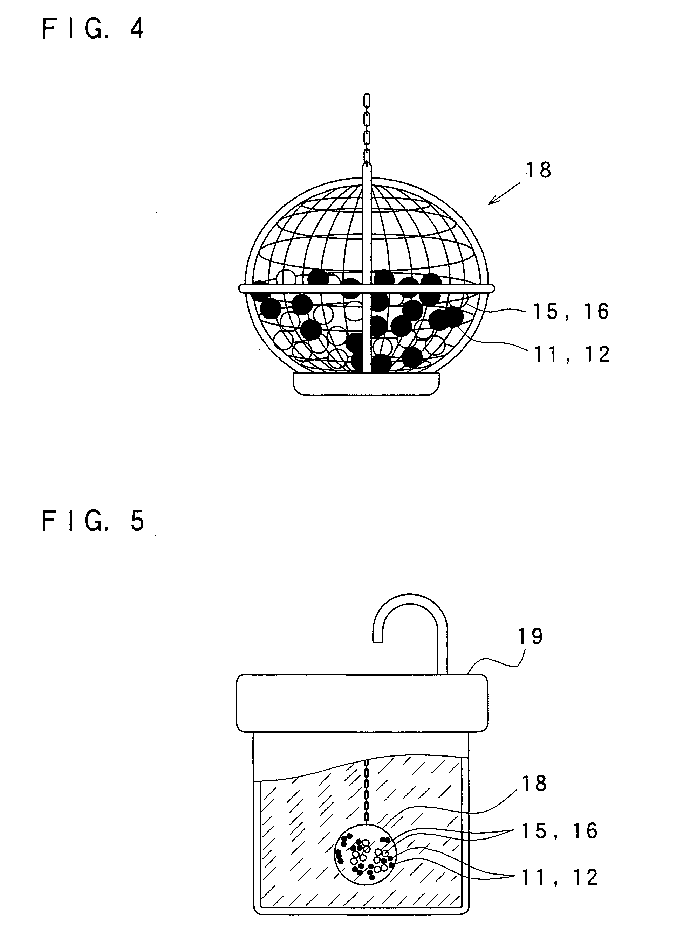

Furthermore, such zeolite or a mineral 32 is not necessarily limited in used by forming a film on the surface of the base materials 21, 22 as powder in a manner mixed with the titanium oxide powder 23. For example, as shown in Fig. 3(b), these may be used as balls 15 as they are substituted for powder, and may be placed in a netted container 18 and used together with the titanium balls 11 or 12 as described in Fig. 4. It is preferable that such a container 18 containing a mixture of the balls 11 and 15 is placed and used in a dark place such as in a toilet tank 19 (see Fig. 5) . In addition, depending on circumstances, as shown in Fig. 3 (c), only the auxiliary powder 32 may be formed as a film on the surface of the base material 22 or the like. Similar to the auxiliary balls 15, auxiliary balls 16 may also be placed and used in the above-described container 18. By such placement in the tank 19, sufficient effects of purification, odor prevention, and disinfection of retained water can be expected even in a dark place.

The base materials 21, 22 used in the present invention are not always necessarily limited to a ball shape. The base materials 21, 22 may have a dice shape, a star shape (star-shaped candy shape), a columnar shape, and the other polyhedral shape besides a ball shape. However, when a ball mill or the like to be described later is used, a base member having a ball shape as close to a perfect sphere as possible is preferable. In addition, the diameter of the base materials 21, 22 is appropriately selected according to the size of a container in an apparatus such as a ball mill to be used.

The material of the base materials 21, 22 is selected from any one or more of ceramics, metals, metal oxides, resins, natural minerals, and wood-based materials. Concretely, glass, ceramics such as silica, metals such as steel, copper, silver, and aluminum, metal oxides such as alumina being an oxide of aluminum and alumina ceramic, polymeric resins such as polyethylene and polypropylene, wood chips, etc., may be mentioned.

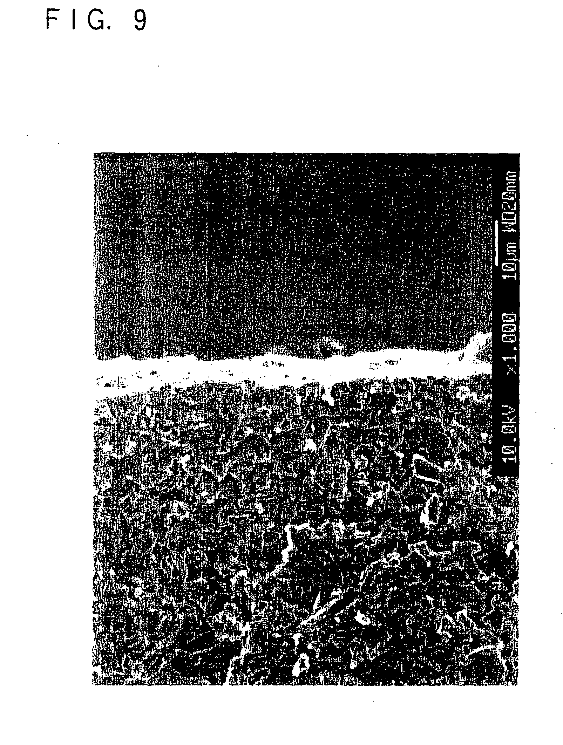

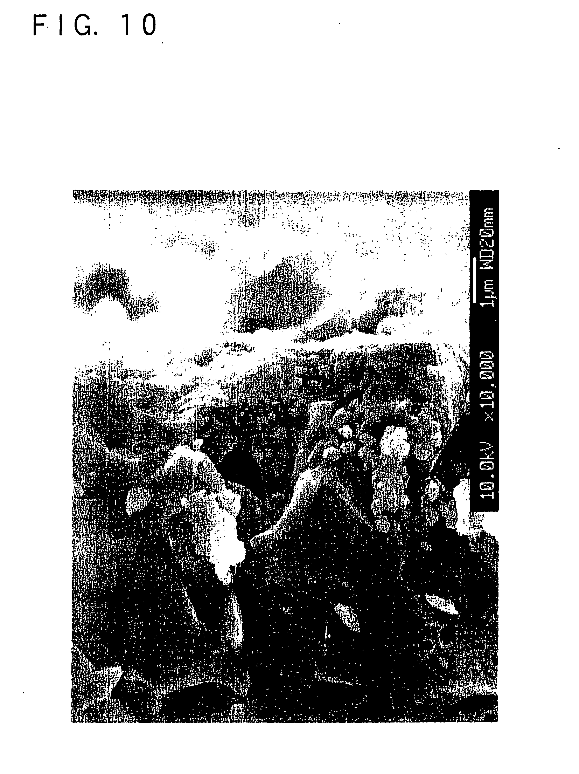

The surface of the above-described base material 21 may also be a flat face as shown in Fig. 1, however, it is preferable that fine pores 24 are formed on the base material 22 as preferably shown in Fig. 2. When such fine pores 24 exist, as shown by photomicrographs of Fig. 9 and Fig. 10, the discolored titanium oxide film 23 is easily press-fitted into the pores 24 to strengthen the film of titanium oxide. As a base material having such effective fine pores 24, an alumina ball may be mentioned.

The manufacturing of a titanium ball of the present invention includes a step of making titanium dioxide powder collide and/or frictionally contact for discoloration. Such a step may be simultaneous with a step of forming a film of discolored oxide titanium on the surface of a base material, or may be provided as a separate preliminary step.

Making titanium dioxide powder collide and/or frictionally contact means collision and/or frictional contact that occurs between the titanium dioxide powder, the powder and base material, the base material and base material, the powder and an apparatus member (a container wall, an agitating blade, or the like), and the base material and apparatus member. An apparatus to cause such a collision and/or frictional contact is sufficient as long as it gives kinetic energy large enough to cause discoloration of titanium dioxide or more. For example, titanium dioxide powder may be vibrated or rocked back and forth, left and right, and up and down in a predetermined container, and furthermore, an apparatus that applies rotation, that is, a vibrating mill, a rocking mill, etc., can be mentioned. In particular, as such an apparatus to give vibration or rocking, preferably used is a planetary ball mill that is structured so as to have titanium dioxide powder and base materials placed in a rotary container that rotates while revolving, make the above-described titanium dioxide powder collide and/or frictionally contact, and also form films on the surfaces of the base materials.

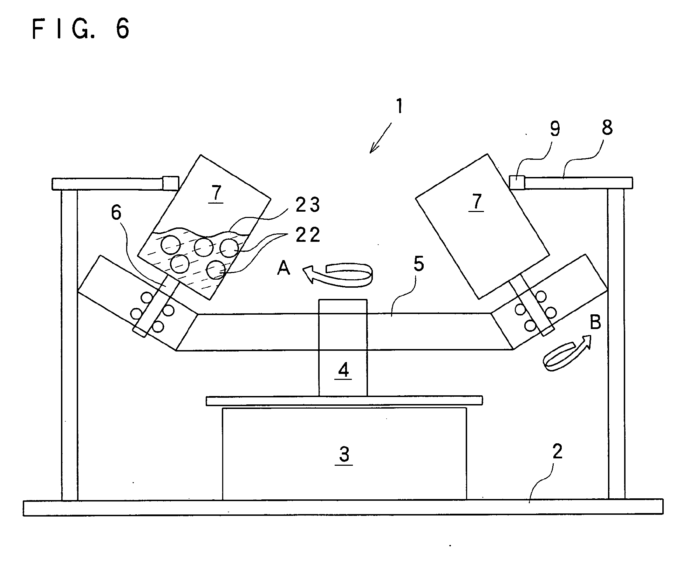

As shown in Fig. 6, a ball mill 1 is provided with a rotary drive unit 3 at the center of a base machine frame 2, and a revolving shaft 4 is rotated in the direction of an arrow A in the drawing by a drive unit 3. A revolving arm 5 is attached to the revolving shaft 4, and cylindrical rotary containers 7 are rotatably attached to both ends of the revolving arm 5 via rotating shafts 6, respectively. In addition, a stopping rubber ring 9 is attached to a top machine frame 8 of the ball mill 1, and lateral walls of the rotary containers 7 are abutted against the rubber ring 9 in a mutually pressing force state. Therefore, when the revolving arm 5 rotates in the arrow A direction, the rotary containers 7 abut with a roll in the ring 9 while rotating in the direction of an arrow B. Accordingly, when the base materials 21, 22 and titanium dioxide powder are placed in such rotary containers 7 and the ball mill 1 is operated, the powder receives a revolving motion and a rotating motion so that the titanium dioxide powder receives sufficient collision and frictional contact. In addition, simultaneously therewith, the titanium dioxide powder is discolored and is mutually press-bonded, and is press-bonded to the surfaces of the base materials 21, 22 to form films. In this case, when fine pores have been formed on the surface of the base material 22, the above-described discolored titanium oxide powder is press-fitted into the pores 24 so that the film 23 is strongly fixedly adhered. In addition, if necessary, a liquid (for example, water or the like) may be added to perform wet processing. For the rotary containers 7, a hard material such as brass, iron, copper, SUS, metallic titanium, alumina, zirconia, or ceramic is used.

In the manufacturing method for a titanium ball of the present invention, in particular, when the aforementioned ball mill 1 is used, the above-described titanium dioxide powder is discolored from white to gray, and the discolored titanium oxide films 23 are easily and simply formed on the surface of the base materials 21, 22. Therefore, the titanium balls 11, 12 can be manufactured economically and inexpensively.

Moreover, the titanium balls 11, 12 having the discolored titanium oxide films 23 make, in an organic matter decomposition test by methylene blue to be described later, the methylene blue colorless (almost transparent) at 34 hours or more under a double irradiation of black light 20. In addition, it shows that the methylene blue is decomposed when the titanium balls are placed for three weeks in a dark place. As shown in an example to be described later, the titanium balls 11, 12 prevent multiplying bacteria and the like and have a water purifying effect, so that a sterilization effect on coli bacilli and the like is sufficiently displayed. Furthermore, a deodorizing effect is also provided.

As such, although a discoloration mechanism of titanium dioxide is unknown, it is expected from such experimental results as well that titanium balls by the manufacturing method of the present invention can display a sufficient activation in a toilet tank or the like where there is hardly any irradiated by light. Example

Hereinafter, a manufacturing method for a titanium ball according to the present invention will be described in greater detail by the following example. However, a manufacturing method for a titanium ball according to the present invention is not limited to the following example.

### <Manufacturing method of titanium ball>

One hundred 8mm-diameter alumina balls having numerous pores on the surface were placed in a metallic titanium-made rotary container (capacity: 200ml) of a planetary ball mill (manufactured by Gokin Planetaring Inc.) as shown in Fig. 6, and 2g of white titanium dioxide powder (ST-01 manufactured by ISHIHARA SANGYO KAISHA, LTD. : average particle diameter is 7nm) was placed, and the container was sealed. Next, the planetary ball mill was operated to rotate the rotary container at 500rpm. Working samples were obtained after a rotating time of 10 minutes.

The following experimental evaluation was performed on the following working samples.

### <Observation and evaluation>

It was observed that a titanium oxide film layer of each of the obtained working-sample titanium balls had been discolored from white to gray or grayish-brown. A discolored titanium oxide film amount was 0.01mg per one working-sample ball. In addition, the working-sample titanium ball was observed, as shown in Fig. 9, at a surface magnification of 1,000 times. It is observed that a discolored titanium oxide film has been formed on the ball surface. In addition, as shown in Fig. 10, by an observation at a surface magnification of 10, 000 times, it is observed that the titanium oxide powder has been mutually press-bonded on the ball surface, and a film thereof has been formed, and the oxide titanium has also been press-fitted into/press-bonded to the pores formed on the alumina ball.

### <Organic matter decomposition test using methylene blue as indicator>

For an organic matter decomposition test by methylene blue, used were, as respective samples, (contrast) 200ml of a methylene blue reference solution (visually blue: 25249-30 manufactured byKANTOCHEMICALCO., INC.methyleneblueconcentration50mg/tap water 4L) placed in a beaker, (Example 1) 200ml of the reference solution and 100g of titanium balls of working samples 1 placed in a beaker, and (Comparative example 1) 200ml of the reference solution and 100g of commercially-available titanium balls placed in a beaker. A twenty-watt black light was irradiated on the respective sample beakers. Then, colors in the beakers at the initial stage, after 22.5 hours, and 34 hours were visually tested. The results are shown in Table 1.

Moreover, in a dark test, used were, as samples, (contrast) 80ml of the above-described methylene blue reference solution placed in a sealed transparent plastic container, (Example 1) 80ml of the reference solution and 50gof titanium balls of working samples placed in a sealed transparent plastic container, and (Comparative example 1) 80ml of the reference solution and 50g of commercially-available titanium balls placed in a sealed transparent plastic container. After the respective sample containers were placed for three weeks in a dark place, colors in the containers were visually tested. The results are shown in Table 1.

**Table 1**

| Elapsed time | Contrast | Example 1 | Comparative example 1 |
|---|---|---|---|
| Initial stage | Blue | Blue | Blue |
| After 22.5 hrs. | Blue | Pale blue | Blue |
| After 34 hrs. | Blue | Almost colorless | Blue |
| Dark test | Blue | Pale Blue | Blue |

Consequently, the titanium balls of Example 1 showed an organic matter decomposition effect based on methylene blue in the water solution. In addition, the titanium balls partially showed an organic matter decomposition effect even in a dark place.

### <Inorganic nitrogen measurement>

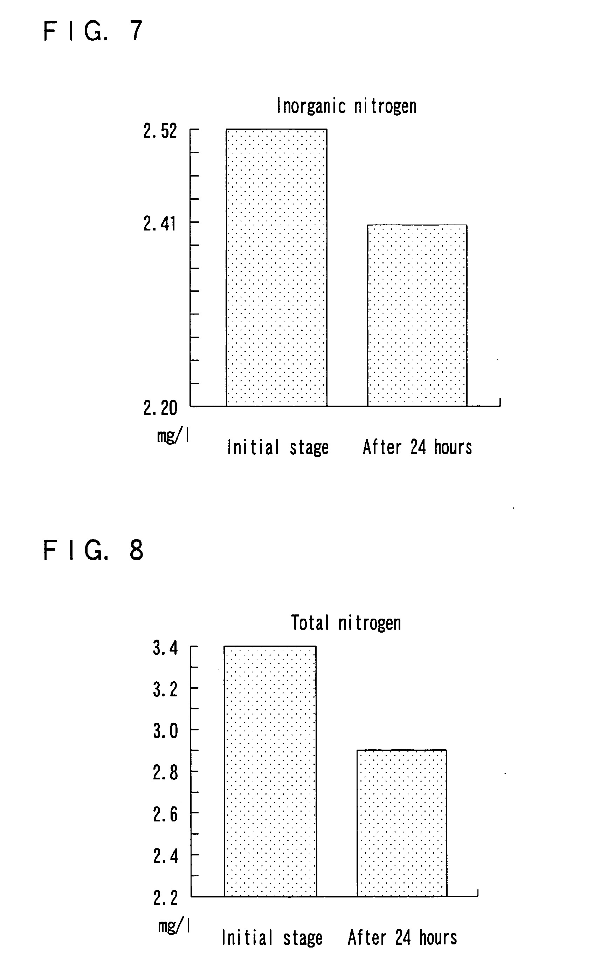

One kilogram of titanium balls of Embodiment 1 were loaded in 7L of a test solution having a concentration of inorganic nitrogen 2.52mg/L (containing nitrate nitrogen and nitrite nitrogen to be indicators) , the solution was placed for 24 hours in a roomusing fluorescent lighting, and a reduction in inorganic nitrogen was observed. The results are shown in Fig. 7. The results of Fig. 7 show that nitrate nitrogen and nitrite nitrogen, etc., to be a nutrient of bacteria were reduced to 2.41mg/L, and thus it is understood that the titanium balls lower the multiplying power of bacteria.

### <Total nitrogen measurement>

One kilogram of titanium balls of Embodiment 1 was loaded in 7L of a test solution having a concentration of total nitrogen 3.4mg/L, the solution was placed for 24 hours in a room using fluorescent lighting, and a reduction in total nitrogen was observed. The results are shown in Fig. 8. The results of Fig. 8 show total nitrogen to be the cause of eutrophication was reduced to 2. 9mg/L in 24 hours, and thus the titanium balls have a water purifying effect.

### <Odor prevention feature measurement>

Boiled eggs were loaded in 3L-sealed acrylic containers, and sulfide gases in the containers were measured at every predetermined time (gas sensor: OMX-GR manufactured by SHINYEI KAISHA was used). One container containing 50 titanium balls of Example 1 was compared with another container without titanium balls to observe an elapsed time-gas concentration relationship. The results are shown in Table 2.

**Table 2**

| Elapsed time (min.) | Gas concentration (relative value) | |
|---|---|---|
| | Contrast | 50 balls of Example 1 |
| 0 | 387 | 291 |
| 30 | 491 | 367 |
| 60 | 562 | 429 |
| 90 | 630 | 477 |
| 120 | 661 | 582 |
| 150 | 682 | 628 |
| 210 | 735 | 722 |

In addition, onion slices were loaded in 3L-sealed acrylic containers, and ammonia (methyl mercaptan) in the containers was measured at every predetermined time (gas sensor: OMX-GR manufactured by SHINYEI KAISHA was used). One container containing 50 titanium balls of Example 1 was compared with another container without titanium balls to observe an elapsed time-gas concentration relationship. The results are shown in Table 3.

**Table 3**

| Elapsed time (min.) | Gas concentration (relative value) | |
|---|---|---|
| | Contrast | 50 balls of Example 1 |
| 0 | 52 | 23 |
| 30 | 60 | 38 |
| 60 | 63 | 41 |
| 90 | 67 | 46 |
| 120 | 72 | 53 |
| 150 | 77 | 60 |
| 180 | 88 | 66 |

The results of Tables 2 and 3 above show that the above-described titanium ballshave a sufficient odor preventing effect against hydrogen sulfide and an ammonia gas as representatives of odors.

### Industrial Applicability

As in the above, the manufacturing method of titanium balls of the present invention allows manufacturing titanium balls that have been improved in a deodorizing function, antibacterial function, antifouling function, and air and water purifying function by adding a step of making titanium dioxide powder collide and/or frictionally contact, and such titanium balls can sufficiently display the above-described functions even in a dark place such as a toilet tank and thus have high industrial applicability.

## Claims

1. A titanium ball manufacturing method, including a step of making titanium dioxide powder collide and/or frictionally contact for discoloration, for forming a film of the discolored titanium oxide on a surface of a base material.

2. The titanium ball manufacturing method according to Claim 1, wherein the titanium dioxide powder is discolored from white to gray.

3. The titanium ball manufacturing method according to Claim 1 or 2, wherein
the titanium dioxide powder and base material are placed in a rotary container that rotates while revolving, the titanium dioxide powder is made to collide and/or frictionally contact, and the discolored titanium oxide film is formed on the surface of the base material.

4. The titanium ball manufacturing method according to Claim 3, wherein
fine pores are formed on the surface of the base material, and the discolored titanium oxide powder is press-fitted into the pores to form a film.

5. The titanium ball manufacturing method according to Claim 4, wherein
the base material is selected from any one or more of ceramics, metals, metal oxides, resins, natural minerals, and wood-based materials.

6. The titanium ball manufacturing method according to Claim 5, wherein
the base material is an alumina ball.

7. The titanium ball manufacturing method according to Claim 1, wherein
an auxiliary raw material that generates electromagnetic waves having a wavelength to enhance a catalytic reaction of the discolored titanium oxide is added besides the titanium dioxide powder raw material.

8. A titanium ball obtained by the manufacturing method according to Claim 1 or 2.

9. The titanium ball according to Claim 8, being contained in a toilet tank.

10. The titanium ball according to Claim 9, together with which an auxiliary ball that generates electromagnetic waves having a wavelength to enhance a catalytic reaction of the titanium oxide is further contained in the toilet tank.
